# EUROPEAN PATENT APPLICATION

(11) **EP 2 100 773 A1**
(43) Date of publication of application: **16.09.2009**
(21) Application number: 09154332.2
(22) Date of filing: 04.03.2009
(51) Int. Cl.: B60R 1/00, B60R 1/02, G02B 27/01

(54) **Vehicle rear view apparatus utilizing heads up display and rear looking sensors**

(30) Priority: 10.03.2008 US 75241
(71) Applicant: Delphi Technologies, Inc., Troy, Michigan 48007 (US)
(72) Inventor: Nicholas, Clayton L., Indianapolis, IN 46240 (US); Howard, Dwight A., Carmel, IN 46033 (US); Reed, Michael S., Noblesville, IN 46062 (US)
(74) Representative: Denton, Michael John

(57) **Abstract**

A vehicle rear view apparatus (8) and method has one or more rear looking sensors (30) which provide rear view information about the environment to the rear of the vehicle (10) and transmit such information via a connection (32, 34) to a heads up display (10) mounted within the vehicle. The heads up display projects an image representative of the rear view sensor output information onto the vehicle windshield (14) in the forward line of sight of the vehicle driver. The connection (32, 34) between the rear looking sensor (30) and the heads up display (12) may be a hardwired connection (32) or a wireless connection (34). The rear looking sensors (30) include one or more of a video camera, an object detector, a distance to object detector, an ultrasonic object detector, a device for projecting the path of the vehicle when moving in reverse, and a speed base time to collision with an object behind the vehicle.

## Description

### BACKGROUND OF THE INVENTION

The present apparatus relates, in general, to vehicle rear view systems and, also, to vehicular heads up displays.

Currently, rear view mirrors are mandated technology in vehicles to provide rear looking information to the vehicle driver. The rear view mirrors are located in the upper center of the vehicle windshield and with proper adjustment, the rear view mirrors provide an adequate view of the landscape or area behind the vehicle. However, due to the location of the rear view mirror, it can cause minor to severe frontal viewing obstructions.

The viewing performance of the rear view mirrors depends on several factors, including driver size, mirror location, rear vehicle contour and rear window size. In the case of commercial vehicles, there are many instances where the rear window is obstructed during practical use such that the driver has to depend on wide side view mirrors.

However, due to the location of the rear view mirror, it can cause minor to severe frontal viewing obstructions.

Since mirrors were first introduced in automobiles, technology has advanced to where there are other ways of providing information regarding the area behind the vehicle. Such alternate methods include a visual view or image of the area behind the vehicle as provided by the inside rear view mirror, enhanced viewer image of the exterior of the vehicle through a camera or imaging device, the distance to an object which can be either parametric data or relative distance indicated by a graphical interface, the projected path of the vehicle as it travels in reverse, highlighting of the most critical object of interest (i.e., the closest object behind the vehicle), and information regarding speed based time to collision with an object behind the vehicle. Most of such methods effectively do not obstruct the forward view of the driver.

However, all such rear viewing systems distract the driver to some extent from a forward looking position. Even an alarm based rear view system which merely generates an audible tone of increasing frequency as the vehicle approaches an object when traveling in reverse, distracts the driver from looking forward and frequently cause the driver to turn his head to view the rear of the vehicle or to look in the rear view mirror. Camera systems and graphical interfaces are typically mounted in the instrument panel of the vehicle, which again requires the driver to turn his eyes toward the instrument panel from a forward view through the windshield.

Thus, it would be desirable to provide a vehicle rear view system which overcomes the aforementioned problems by providing accurate rear viewing information to a vehicle driver all in the safe driving line of sight of the driver through the windshield.

### SUMMARY OF THE INVENTION

A vehicle rear view apparatus includes a heads up display capable of projecting an image onto a windshield of a vehicle, a rear view sensor adapted to be mounted on the vehicle for providing rear view data representative of the environment to the rear of the vehicle; and a connection between the rear view sensor and the heads up display to provide the output of the rear view sensor to the heads up display for projection of the rear view data in the front line of sight of the vehicle driver.

The rear view sensor may include at least one of a video camera, an object detector, a distance to object detector, an ultrasonic object detector, a device for projecting the path of the vehicle when moving in reverse and a speed base time to collision with an object behind the vehicle sensor.

The connection includes a hardwired connection between the rear view sensor and the heads up display, and a wireless transmitter and receiver coupled to the rear view sensor and the heads up display to wirelessly communicate the output of the rear view sensor to the heads up display.

A method of communicating rear view data representative of the environment rearward of a vehicle to a location viewable by a driver of the vehicle comprises the steps of communicating rear view data between at least one rear view sensor on the vehicle and a heads up display mounted in the vehicle, and projecting a visual image by the heads up display representative of the rear view data in a forward looking line of sight of the vehicle driver.

The present rear view apparatus uniquely provides the output of one or more rear looking sensors on a vehicle to a heads up display so that rear view information, including video images and other information, are easily visible to the driver in the safe driving line of sight of the driver through the windshield.

### BRIEF DESCRIPTION OF THE DRAWING

The various features, advantages, and other uses of the present invention will become more apparent by referring to the following detailed description and drawing in which:

Fig. 1 is a plan view of a vehicle incorporating a rear viewing apparatus and heads up display;

Fig. 2 is a side elevational view showing a heads up display mounted on the dashboard of the vehicle;

Fig. 3 is a pictorial representation of the projection of a rear view image by the heads up display in the lower portion of the windshield; and

Fig. 4 is a block diagram of the components of the rear viewing apparatus.

### DESCRIPTION OF THE PREFERRED EMBODIMENTS

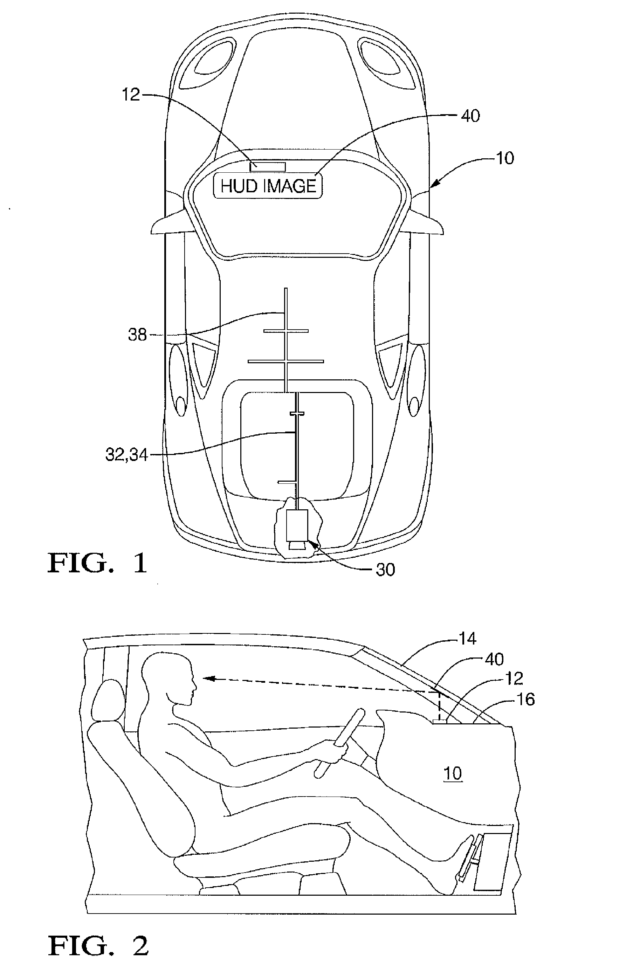

Referring now to Figs. 1 - 4, there is depicted a rear viewing apparatus incorporated into a vehicle 10. The rear viewing apparatus 8 includes a heads up display (HUD) 12 mounted on or in the dashboard 16 of the vehicle 10 which is capable of projecting an image in the forward line of sight of the driver. The rear viewing 8 apparatus also includes a rear looking sensor 30 which is capable of providing an output representative of rear view data, such as a video image of the area to the rear of the vehicle, the distance to an object rearward of the vehicle which can be either parametric data or relative distance, the projected path of the vehicle as it travels in reverse, highlighting of the most critical objective interest such as the closest object behind the vehicle, in a video image, and information regarding speed base time to collision with an object behind the vehicle.

Such information or data can be obtained by using at least one sensor or a plurality of sensors 30 which can be any of a camera, radar, ultrasonic sensors, LIDAR, infrared, or camera image processing. The sensor or sensors 30 are mounted on the rear of the vehicle 10.

The output of the rear looking sensor or sensors 30 is transmitted to the HUD 12 via a hardwired connection 32 or through a wireless connection 34. The wireless connection 34 requires a transmitter 36 capable of transmitting the output of the rear looking sensor (s) 30 through an antenna 34 to a similar antenna coupled to a receiver 39 connected to an input of the HUD 12.

The HUD 12 typically includes a video processor, a display unit or image source and a mirror which projects an image which appears to be placed in the windshield 16 of the vehicle 10. The video processor receives data from the rear looking sensors 30 and formats the data into a suitable display signal that is communicated to the display unit. The video processor can include a digital microprocessor, a memory and related circuitry.

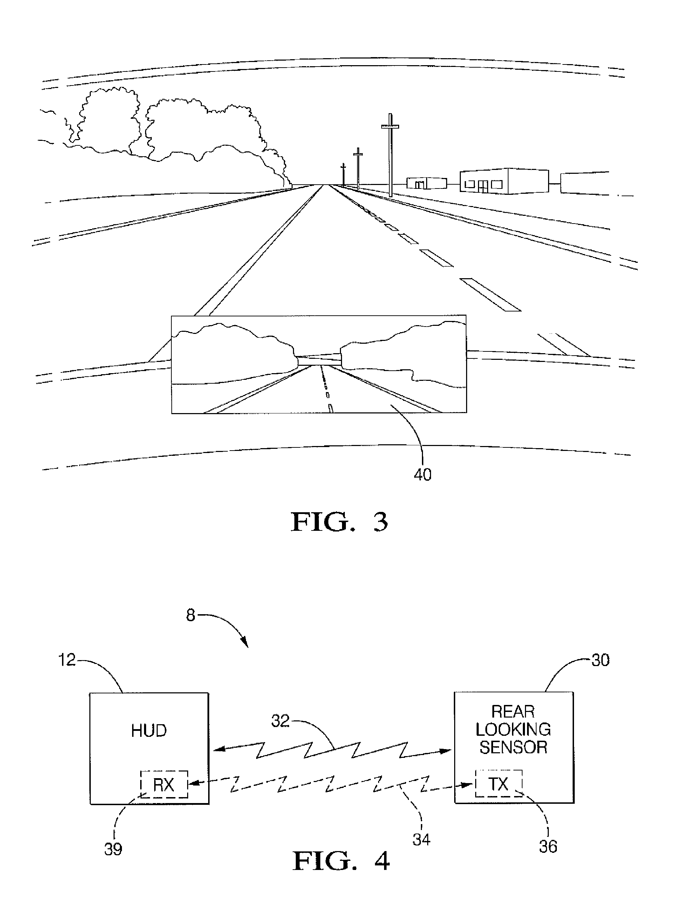

As shown in Fig. 3, in the case of a video image from a camera acting as the rear looking sensor 30, a video image is generated by the HUD 12 and projected onto the windshield 14 at a location in the lower portion of the windshield 14 in the driver's front line of sight. This bottom location is by way of example only, as the HUD 12 can project the image 40 for viewing on other locations in the windshield 14, such as centered, upper edge, etc. This still allows a driver to view the image 40 while at the same time continuing to look through the windshield when the vehicle is in operation.

Other data may also be provided on the image projected by the HUD 12 and displayed within the same window as the video image 40 shown in Fig. 3. Any of the rear looking sensor outputs described above can be communicated from the rear looking sensor 30 to the HUD 12 and projected by the HUD 12 into the image window, for example, separate from or as an overlay on the image 40.

## Claims

1. A vehicle rear view apparatus (8) comprising
a heads up display (12) capable of projecting an image which appears on a windshield (14) of a vehicle (10);
a rear view sensor (30) adapted to be mounted on the vehicle (10) for providing data (40) representative of the environment to the rear of the vehicle (10); and
a connection (32, 34) between the rear view sensor (30) and the heads up display (12) to provide an output of the rear view sensor (30) to the heads up display (12) for projection of the rear view data in the front line of sight of the vehicle driver.

2. The apparatus of claim 1 wherein the rear view sensor comprises:
at least one of a video camera, an object detector, a distance to object detector, an ultrasonic object detector, a device for projecting the path of the vehicle when moving in reverse, and a speed base time to collision with an object behind the vehicle sensor.

3. The apparatus of claim 1 wherein the connection comprises:
a hardwired connection (32) between the rear view sensor (30) and the heads up display (12).

4. The apparatus of claim 1 wherein the connection comprises:
a wireless transmitter (36) and a receiver (39) the means coupled to the rear view sensor (30) and the heads up display (12) to wirelessly communicate the output of the rear view sensor (30) to the heads up display (12).

5. A method of communicating rear view data representative of the environment rearward of a vehicle to a location viewable by a driver of the vehicle comprising the steps of:
communicating rear view data between at least one rear view sensor on the vehicle and a heads up display mounted in the vehicle; and
projecting a visual image by the heads up display representative of the rear view data in a forward looking line of sight of the vehicle driver.
